# EUROPÄISCHE PATENTSCHRIFT

(11) **EP 1 450 124 B1**
(45) Veröffentlichungstag und Bekanntmachung des Hinweises auf die Patenterteilung: **27.05.2009**
(21) Anmeldenummer: 04000488.9
(22) Anmeldetag: 13.01.2004
(51) Int. Cl.: F28F 21/06

(54) **Wärmetauscherrohr**
Heat exchanger tube
Tube d'échange de chaleur

(30) Priorität: 28.01.2003 DE 20301249 U
(43) Veröffentlichungstag der Anmeldung: 25.08.2004
(73) Patentinhaber: REHAU AG + Co, 95111 Rehau (DE)
(72) Erfinder: Kania, Guido, 91080 Marloffstein (DE); Hendel, Roland, 91086 Aurachtal (DE)

(56) Entgegenhaltungen:
- EP-A1- 0 492 129
- DE-A1- 3 320 273
- GB-A- 1 178 685

## Beschreibung

Die Erfindung betrifft ein Wärmetauscherrohr zur Verlegung im Erdreich.

Derartige Wärmetauscherrohre kommen z. B. bei einer kontrollierten Wohnraumlüftung für moderne Hauskonzepte wie Passiv-/Niedrigstenergie-Häuser oder Niedrigenergie-Häuser zum Einsatz. Hierbei erfolgt die Zuführung der Frischluft über ein erdverlegtes Rohrsystem. Bislang kamen dabei kerngeschäumte PVC-Kanalrohre ("KG-Rohre") oder gewellte Rohre aus Polyäthylen (PE) oder Polypropylen (PP) zum Einsatz. Aufgrund ihrer Herstellungstechnik weisen KG-Rohre eine Porenstruktur auf, wodurch sich eine Wärmeisolationswirkung durch eingeschlossene Luftblasen ergibt.

Die US 4,144,111 offenbart ein isoliertes Rohr zum Transport von Warmwasser. Die US 2002/0064618 A1 gibt ein isoliertes Wärmeleitrohr zum Kühlen von hitzegenerierenden Oberflächen an.

Dies verringert den bei der genannten Wohnraumlüftung erwünschten Wärmeübergang zwischen der im Wärmetauscherrohr geführten Luft und der Temperatur des Erdreichs. Auch vollwandiges, also nicht geschäumtes PVC hat eine relativ schlechte spezifische Wärmeleitfähigkeit. Auch bei gewellten Rohren ergibt sich aufgrund der Wellenstruktur eine Isolationswirkung durch eingeschlossene Luftblasen. Auch hin- sichtlich anderer Materialeigenschaften, wie z. B. der Rohrsteifigkeit, haben die bekannten Wärmetauscherrohre noch Verbesserungsbedarf.

Ein Wärmetauscherrohr wird in der JP 63194195 offenbart, wobei das Rohr aus einem Polymerwerkstoff mit einem eingelagerten Füllstoff besteht, der gegenüber dem Polymerwerkstoff abgewandelte Materialeigenschaften aufweist. Die JP 02071094 offenbart ein Wärmetauscherrohr, das einen Rohrkörper aus einem Polymerwerkstoff aufweist, mit einem in der Oberfläche eingelagerten Anteil, zum Beispiel Kupfer mit hoher thermischer Leitleitfähigkeit, welcher gegenüber dem Polymerwerkstoff abgewandelte Materialeigenschaften hat.

Ausgehend von diesem Stand der Technik ist es die Aufgabe der vorliegenden Erfindung, ein Wärmetauscherrohr zur schaffen, dessen Eigenschaften verbessert sind, ohne dass hierbei auf die erwünschten Eigenschaften bewährter Rohrwerkstoffe verzichtet werden muss.

Diese Aufgabe wird erfindungsgemäß gelöst durch ein Wärmetauscherrohr mit den im Anspruch 1 angegebenen Merkmalen.

Erfindungsgemäß wurde erkannt, dass sich durch den Einsatz von in einem Basis- Polymerwerkstoff eingelagerten Füllstoffen eine erwünschte Kombination von Materialeigenschaften des Basis-Polymerwerkstoffs einerseits und des Füllstoffs andererseits einstellen lässt.

Insbesondere, wenn der Basis-Polymerwerkstoff nur bei einer bestimmten Materialeigenschaft verbesserungsbedürftig ist, kann durch Wahl eines entsprechenden Füllstoffs, der bei der einzustellenden Materialeigenschaft in der gewünschten Richtung von derjenigen des Basis-Polymerwerkstoffs abweicht, eine gewünschte Materialeigenschaftskombination erzielt werden.

Ein Wärmetauscherrohr gemäß Anspruch 3 weist eine gute Eignung zum Einsatz bei einem erdverlegten Rohrsystem im Rahmen einer kontrollierten Wohnraumlüftung auf. Der Wirkungsgrad eines hierbei eingesetzten Erdreich-Wärmetauschers wird durch die effektive Aufnahme der Erdwärme über das Wärmetauscherrohr erhöht.

Füllstoffe gemäß Anspruch 4 lassen sich einfach in einen Basis-Polymerwerkstoff einlagern.

Ein Füllstoff-Volumenanteil gemäß Anspruch 5 führt, was bestimmte Grund- Materialeigenschaften, wie z. B. Materialverarbeitbarkeit, angeht, noch zu einer geringen Beeinflussung der Eigenschaften des Basis-Polymerwerkstoffs. Andere Eigenschaften können hingegen bei einem derartigen Füllstoff-Volumenanteil gezielt beeinflusst werden.

Füllstoffe gemäß Anspruch 6 erleichtern die geradlinige Verlegung der Wärmetauscherrohre in einen Graben mit gleichmäßigem Plangefälle. Die Bildung von Totvolumina, in denen sich Kondenswasser, das sich bei Abkühlung warm-feuchter Außenluft innerhalb z. B. eines kühlen Erdreich-Wärmetauschers bildet, innerhalb des Rohrsystems können hierdurch vermieden werden. Die Bildung erhöhter Keimzahlen sowie einer Geruchsbelästigung wird dadurch verhindert. Gleichzeitig kann durch den Einsatz derartiger Füllstoffe mit erhöhter Steifigkeit die Ringsteifigkeit des Wärmetauscherrohrs erhöht werden. Dies verhindert, dass es bei ungünstigen Bodenverhältnissen, z. B. bei bindigen Böden, zu erhöhten Verformungen des Wärmetauscherrohrs kommt.

Ein Rohrkörper mit einer Innenschicht gemäß Anspruch 7 verhindert beim Betrieb des Wärmetauscherrohrs mit einem Gas die elektrostatische Anhaftung z. B. von Schmutzpartikeln, was den Reinigungsaufwand für das Wärmetauscherrohr verhindert. Gleichzeitig wird vermieden, dass in solchen Fällen die Rohr-Innenseite einen Nährboden für Keime, Bakterien und Pilze entstehen lässt.

Füllstoffe gemäß Anspruch 8 haben sich als besonders geeignet zur Erhöhung der elektrischen Leitfähigkeit bzw. zur Reduzierung des Oberflächenwiderstandes auf der Innenschicht herausgestellt. Hierbei lässt sich eine Reduktion des Oberflächenwiderstandes um drei bis neun Größenordnungen, z. B. von 2,5 x 10¹³ Ohm auf 2,5 x 10⁴ Ohm, realisieren. Alternativ oder zusätzlich kann die Verbesserung der Leitfähigkeit der Innenschicht auch durch den Zusatz von an sich bekannten Antistatik-Zusätzen erreicht werden.

Eine Innenschicht gemäß Anspruch 9 lässt sich mit genau vorgegebenem Füllstoffanteil gleichmäßig im Wärmetauscherrohr anbringen.

Durch einen Füllstoff bzw. Wirkstoff gemäß Anspruch 1 lässt sich eine Reduktion der Zahl von Keimen, z. B. von Bakterien, Pilze, Hefen oder Algen, um bis zu 90 %, mindestens aber um 20 bis 50 %, erreichen. Durch den antimikrobiellen Zusatzstoff lässt sich eine Verbesserung der Hygiene des durch den Hohlkörper strömenden Fluids erreichen. Unerwünschte Gerüche, Verfärbungen oder Keime werden nicht an das vorbeiströmende Fluid abgegeben.

Massenanteile gemäß Anspruch 2 haben sich zum Erreichen der gewünschten antimikrobiellen Wirkung als besonders effizient herausgestellt.

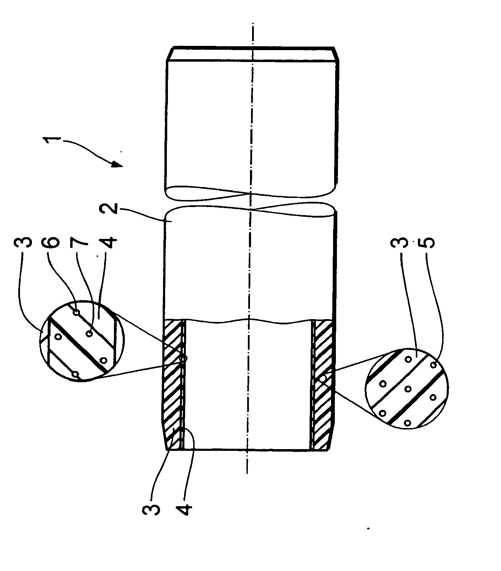

Ein Ausführungsbeispiel der Erfindung wird nachfolgend anhand der Zeichnung näher erläutert. Die einzige Figur zeigt ein unterbrochen dargestelltes und teilweise geschnittenes Wärmetauscherrohr mit zwei Ausschnittsvergrößerungen.

Das Wärmetauscherrohr 1 weist einen hohlzylinderförmigen Rohrkörper 2 auf. Dieser umfasst eine Rohrwand 3 mit einer Innenschicht 4.

Die Rohrwand 3 ist aus einem Polymerwerkstoff gefertigt. Basis für diesen Polymerwerkstoff ist Polypropylen (PP). Eingelagert in diesen Basis-Polymerwerkstoff sind Füllstoffe 5 aus einem Material mit gegenüber dem Basis-Polymerwerkstoff abgewandelten Materialeigenschaften.

Ein erster Füllstoff-Anteil umfasst Füllstoffe 5, die eine gegenüber Polypropylen erhöhte Wärmeleitfähigkeit aufweisen. Normales, keine Füllstoffe aufweisendes Polypropylen hat eine spezifische Wärmeleitfähigkeit von 0,22 W/m K. Aufgrund der Zugabe der Füllstoffe erhöhter Wärmeleitfähigkeit wird eine spezifische Wärmeleitfähigkeit z. B. bis hin zu 0,75 W/m K erreicht, was einer Erhöhung der spezifischen Leitfähigkeit um 240 % entspricht. Zur Erhöhung der Wärmeleitfähigkeit kann eine Reihe von verschiedenen Füllstoffen 5 auch in Kombination eingesetzt werden. Beim Wärmetauscherrohr 1 handelt es sich bei dem anorganischen Füllstoff um Kreide. Alternativ oder zusätzlich können als anorganische Füllstoffe 5 zur Erhöhung der spezifischen Wärmeleitfähigkeit Talkum, Glas, Wollastonit, Silikat, Quarz, Glimmer, Schiefer, Kaolin oder andere entsprechende anorganische Füllstoffe eingesetzt werden. Der Füllstoff 5 hat beim Wärmetauscherrohr 1 einen Volumenanteil von 25 %. Auch andere Zugabemengen im Bereich eines Volumenanteils zwischen 5 und 40 %, vorzugsweise zwischen 15 und 30 %, sind möglich. Mit einem zugegebenen Volumenanteil von 25 % Füllstoff 5 wird beim Wärmetauscherrohr 1 eine spezifische Wärmeleitfähigkeit im Bereich von 0,4 W/m K erzielt.

Gleichzeitig wird durch den im die Rohrwand 3 eingelagerten Füllstoff 5 eine gegen- über Polypropylen als Basis-Polymerwerkstoff erhöhte Steifigkeit des Rohrkörpers 3 erreicht. Diese kann je nach eingelagertem, insbesondere anorganischem Füllstoff 5 aus der oben genannten Auflistung, um bis zu 300 % gegenüber dem ungefüllten Basis-Polymerwerkstoff erhöht sein.

Die Innenschicht 4 ist ebenfalls aus einem Polymerwerkstoff hergestellt. Auch hier ist der Basis-Polymerwerkstoff Polypropylen.

In die Innenschicht 4 sind Füllstoffe 6 eingelagert aus einem Material mit gegenüber dem Basis-Polymerwerkstoff erhöhter elektrischer Leitfähigkeit. Als derartige Füllstoffe 6 eignen sich insbesondere Leitruß oder Graphit.

Die Innenschicht 4 wird auf der Rohrwand 3 durch ein an sich bekanntes Koextrusionsverfahren aufgebracht. Durch die Einlagerung der Füllstoffe 6 mit gegenüber dem Basis-Polymerwerkstoff erhöhter elektrischer Leitfähigkeit in die Innenschicht 4 wird der Oberflächenwiderstand auf der Innenschicht 4 von 2,5 x 10¹³ Ohm auf 2,5 x 10⁴ Ohm reduziert.

Je nach Zugabemenge des Füllstoffs 6 mit gegenüber dem Basis-Polymerwerkstoff erhöhter Leitfähigkeit kann der Oberflächenwiderstand um drei bis neun Größenordnungen reduziert werden.

Neben dem Füllstoff 6 mit gegenüber dem Basis-Polymerwerkstoff erhöhter elektrischer Leitfähigkeit weist die Innenschicht 4 einen weiteren eingelagerten Füllstoff 7 aus einem Material mit antimikrobieller Wirkung auf. Beim Wärmetauscherrohr 1 werden z.B. Silberionen als antimikrobieller Füllstoff 7 eingesetzt. Alternativ oder zusätzlich können auch Zink-, Cadmium-, Arsen- und/oder Kupferionen eingesetzt sein. Der Zusatz mit antimikrobiellen Füllstoff 7 erfolgt beim Wärmetauscherrohr 1 mit einem Massenanteil von 1 %. Alternativ sind auch Massenanteile zwischen 0,1 und 10 % einsetzbar.

## Patentansprüche

1. Wärmetauscherrohr (1) zur Verlegung im Erdreich mit einem Rohrkörper (2) aufweisend einen Basis-Polymerwerkstoff mit eingelagerten Füllstoffen (5, 6, 7) aus einem Material mit gegenüber dem Basis-Polymerwerkstoff abgewandelten Materialeigenschaften, **dadurch gekennzeichnet, dass** der Rohrkörper (2) eine einem Durchströmungsraum zugewandte Innenschicht (4) mit eingelagerten Füllstoffen (7) aus einem Material mit antimikrobieller Wirkung aufweist.

2. Wärmetauscherrohr nach Anspruch 1, **dadurch gekennzeichnet, dass** die Füllstoffe (7) Silber-, Zink-, Cadmium, Arsen- oder Kupferionen aufweisen, wobei insbesondere ein Massenanteil innerhalb der Innenschicht (4) zwischen 0,1 und 10% vorliegt.

3. Wärmetauscherrohr nach Anspruch 1 oder 2, **dadurch gekennzeichnet, dass** die Füllstoffe (5) eine gegenüber dem Basis-Polymerwerkstoff erhöhte Wärmeleitfähigkeit aufweisen.

4. Wärmetauscherrohr nach einem der Ansprüche 1 bis 3, **dadurch gekennzeichnet, dass** die Füllstoffe (5) zumindest teilweise durch anorganische Füllstoffe, insbesondere Kreide, Talkum, Glas, Wollastonit, Silikat, Quarz, Glimmer, Schiefer, Kaolin, gebildet sind.

5. Wärmetauscherrohr nach einem der Ansprüche 1 bis 4, **gekennzeichnet durch** einen Volumenanteil der Füllstoffe (5) zum Basis-Polymerwerkstoff von 5 bis 40 %, vorzugsweise von 15 bis 30 %.

6. Wärmetauscherrohr nach einem der Ansprüche 1 bis 5, **dadurch gekennzeichnet, dass** die mit Füllstoffen (5) verstärkte Polymermatrix eine gegenüber dem Basis-Polymerwerkstoff erhöhte Steifigkeit aufweist.

7. Wärmetauscherrohr nach einem der Ansprüche 1 bis 6, **dadurch gekennzeichnet, dass** der Rohrkörper (2) eine einem Durchströmungsraum zugewandte Innenschicht (4) mit eingelagerten Füllstoffen (6) aus einem Material mit gegenüber dem Basis-Polymerwerkstoff erhöhter elektrischer Leitfähigkeit aufweist.

8. Wärmetauscherrohr nach Anspruch 7, **dadurch gekennzeichnet, dass** die Füllstoffe (6) zumindest teilweise aus Leitruß oder Graphit bestehen.

9. Wärmetauscherrohr nach Anspruch 7 oder 8, **gekennzeichnet durch** eine in Bezug auf den sonstigen Rohrkörper (2) koextrudierte Innenschicht (4).

## Claims

1. Heat-exchanger tube (1) for laying in the ground with a tube body (2) comprising a main polymer material with embedded fillers (5, 6, 7) composed of a material whose properties have been modified with respect to the main polymer material, **characterized in that** the tube body (2) comprises an inner layer (4) which faces towards a flow cavity and which has embedded fillers (7) composed of a material with antimicrobial action.

2. Heat-exchanger tube according to Claim 1, **characterized in that** the fillers (7) have silver ions, zinc ions, cadmium ions, arsenic ions or copper ions, the proportion by weight within the inner layer (4) being in particular from 0.1 to 10%.

3. Heat-exchanger tube according to Claim 1 and 2, **characterized in that** the thermal conductivity of the fillers (5) is higher than that of the main polymer material.

4. Heat-exchanger tube according to any of Claims 1 to 3, **characterized in that** the fillers (5) are at least to some extent inorganic fillers, in particular chalk, talc, glass, wollastonite, silicate, quartz, mica, slate, kaolin.

5. Heat-exchanger tube according to any of Claims 1 to 4, **characterized by** a proportion of the fillers (5) by volume, based on the main polymer material, of from 5 to 40%, preferably from 15 to 30%.

6. Heat-exchanger tube according to any of Claims 1 to 5, **characterized in that** the stiffness of the polymer matrix reinforced with fillers (5) is higher than that of the main polymer material.

7. Heat-exchanger tube according to any of Claims 1 to 6, **characterized in that** the tube body (2) has an inner layer (4) which faces towards a flow cavity and which has embedded fillers (6) composed of a material whose electrical conductivity is higher than that of the main polymer material.

8. Heat-exchanger tube according to Claim 7, **characterized in that** the fillers (5) are composed at least to some extent of conductive carbon black or of graphite.

9. Heat-exchanger tube according to Claim 7 or 8, **characterized by** an inner layer (4) coextruded in relation to the remainder of the tube body (2).

## Revendications

1. Tube échangeur de chaleur (1) à enterrer, qui comporte un corps de tube (2) comportant un matériau polymère de base à charges (5, 6, 7) incorporées à base d'un matériau à propriétés de matériau modifiées par rapport au matériau polymère de base, **caractérisé en ce que** le corps de tube (2) présente une couche interne (4), tournée vers l'espace d'écoulement, à charges (7) incorporées qui sont à base d'un matériau à activité antimicrobienne.

2. Tube échangeur de chaleur selon la revendication 1, **caractérisé en ce que** les charges (7) comportent des ions argent, zinc, cadmium, arsenic ou cuivre, en particulier une proportion en masse comprise entre 0,1 et 10 % étant présente à l'intérieur de la couche interne (4).

3. Tube échangeur de chaleur selon les revendications 1 et 2, **caractérisé en ce que** les charges (5) présentent une conductibilité thermique accrue par rapport au matériau polymère de base.

4. Tube échangeur de chaleur selon les revendications 1 à 3, **caractérisé en ce que** les charges (5) sont constituées au moins en parties de charges inorganiques, en particulier de craie, talc, verre, wollastonite, silicate, quartz, mica, schiste, kaolin.

5. Tube échangeur de chaleur selon l'une quelconque des revendications 1 à 4, **caractérisé par** une proportion en volume des charges (5) de 5 à 40 %, de préférence de 15 à 30 %, par rapport au matériau polymère de base.

6. Tube échangeur de chaleur selon l'une quelconque des revendications 1 à 5, **caractérisé en ce que** la matrice en polymère renforcée avec des charges (5) présente une rigidité accrue par rapport au matériau polymère de base.

7. Tube échangeur de chaleur selon l'une quelconque des revendications 1 à 6, **caractérisé en ce que** le corps de tube (2) présente une couche interne (4), tournée vers l'espace d'écoulement, à charges (6) incorporées qui sont à base d'un matériau à conductibilité électrique accrue par rapport au matériau polymère de base.

8. Tube échangeur de chaleur selon la revendication 7, **caractérisé en ce que** les charges (5) consistent au moins en partie en noir de carbone ou en graphite.

9. Tube échangeur de chaleur selon la revendication 7 ou 8, **caractérisé par** une couche interne (4) coextrudée eu égard au corps de tube (2) respectif.
